# EUROPÄISCHE PATENTSCHRIFT

(11) **EP 0 562 175 B1**
(45) Veröffentlichungstag und Bekanntmachung des Hinweises auf die Patenterteilung: **11.10.1995**
(21) Anmeldenummer: 92120927.6
(22) Anmeldetag: 09.12.1992
(51) Int. Cl.: F16N 11/10

(54) **Schmierstoffspender zur gasgesteuerten Abgabe eines Schmiermittels an eine Maschine**
Lubricant dispenser for gas controlled dispensing of lubricant to a machine
Distributeur à graise pour délivrance commandé par gaz d'une graise à une machine

(30) Priorität: 26.03.1992 DE 4209776
(43) Veröffentlichungstag der Anmeldung: 29.09.1993
(73) Patentinhaber: Satzinger GmbH & Co., 97717 Euerdorf (DE)
(72) Erfinder: Graf, Walter, Dipl.-Ing., W-8737 Euerdorf (DE)
(74) Vertreter: Andrejewski, Walter

(56) Entgegenhaltungen:
- EP-A- 0 278 138
- WO-A-89/08800
- DE-A- 3 811 469

## Beschreibung

Die Erfindung betrifft einen Schmierstoffspender zur gasgesteuerten Abgabe eines Schmierstoffes an eine Maschine, - mit einem Gehäuse für die Aufnahme eines Schmierstoffvorrates, einem Maschinenanschlußteil mit Schmierstoffabgabekanal an einer Seite des Gehäuses sowie einer Gasentwicklungszelle an der dem Anschlußteil gegenüberliegenden Seite des Gehäuses und mit einem in das Gehäuse eingepaßten Stellkolben, wobei die Bewegung des Stellkolbens von dem entwickelten Gas gesteuert ist, die Gasentwicklungszelle aus einem Bodenteil, einer Magazinaufnahme und einer Abdeckkappe besteht und in das Gehäuse einsetzbar ist, wobei in die Magazinaufnahme ein Magazin mit einem darin untergebrachten galvanischen Gasentwicklungselement einsetzbar ist, wobei im jungfräulichen Zustand der Gasentwicklungszelle in dem Raum zwischen Bodenteil und Abdeckkappe eine Gasentwicklungsflüssigkeit angeordnet ist, mit der das Gasentwicklungselement bei Kontakt gasbildend reagiert und von der das in die Magazinaufnahme eingesetzte Magazin mit dem Gasentwicklungselement im jungfräulichen Zustand der Gasentwicklungszelle durch eine Trennwand getrennt ist, die Trennwand durch Betätigung einer mit dem Magazin verbundenen mechanischen Einschalteinrichtung abdrückbar oder zerstörbar ist, so daß das Gasentwicklungselement mit der Gasentwicklungsflüssigkeit in Kontakt kommt und die Gasentwicklung einsetzt. - Die Gasentwicklung beruht auf einem elektrochemischen Vorgang. Dazu sind zumeist ein Gasentwicklungselement, welches aus einem Metall oder einer Metallegierung besteht, und eine Gasentwicklungsflüssigkeit, z. B. eine Base oder eine Säure, vorgesehen, die miteinander gasentwickelnd reagieren. Die Gasentwicklung ist bei Inbetriebnahme des Schmierstoffspenders einschaltbar und danach ein langsamer, zeitabhängiger Vorgang, der mit der Erschöpfung der Gasentwicklung in der Gasentwicklungszelle endet.

Bei dem bekannten Schmierstoffspender des eingangs beschriebenen Aufbaus, von dem die Erfindung ausgeht (DE 38 11 469 A1 = EP-A-0 397 801), ist das Gehäuse auf der dem Anschlußteil gegenüberliegenden Seite durch einen angeformten Boden abgeschlossen. In dem Boden befindet sich eine zentrale Ausnehmung. Das Anschlußteil befindet sich in einem in den Gehäusemantel eingesetzten Deckel, der mit Hilfe einer Falznaht gehalten ist. Die Gasentwicklungszelle ist kein selbständiges Bauteil. Sie besteht aus einem Bodenteil und einet elastischen Haube, die mit dem Bodenteil verbunden ist. In dem Bodenteil der Gasentwicklungszelle befindet sich eine Magazinaufnahme, die zur elastischen Haube hin durch eine Trennwand abgeschlossen ist. Die Gasentwicklungszelle wird mit der Gasentwicklungsflüssigkeit gefüllt und als vorgefertigtes Bauteil vor dem Einsetzen des Deckels in das Gehäuse eingeführt. Danach wird der Stellkolben in das Gehäuse eingesetzt, und der Deckel mit dem Anschlußteil wird aufgesetzt. Der Stellkolben wird nicht unmittelbar von dem Gas, welches sich nach Inbetriebnahme des Schmierstoffspenders entwickelts, beaufschlagt, er wird vielmehr von der elastichen Haube beaufschlagt, die sich bei der Gasentwicklung aufbläht. In die zentrale Ausnehmung des Bodens wird das Magazin eingesetzt, es wird in die Magazinaufnahme eingeschraubt und kann die Trennwand der Magazinaufnahme absprengen oder zerstören. Das Magazin selbst besitzt einen Hohlraum für die Aufnahme des Gasentwicklungselementes. Dieser ist von einer membranartigen Trennwand abgeschlossen, die galvanisch zerstört wird, wenn das Magazin in der beschriebenen Weise eingeschraubt ist und die Gasentwicklungsflüssigkeit mit dieser Trennwand in Verbindung kommt. Die bekannte Ausführungsform ist in fertigungstechnischer und in montagetechnischer Hinsicht aufwendig. Sie ist in funktioneller Hinsicht verbesserungsfähig, da der Gasdruck nicht unmittelbar den Stellkolben beaufschlagt, sondern auch die elastische Verformung der Haube überwinden muß und die Rückstellkräfte mit zunehmender elastischer Verformung dieser Haube sich vergrößern.

Bei einem anderen Schmierstoffspender (DE 37 18 341 C2) ist die Gasentwicklungszelle ebenfalls kein selbständiges Bauteil, sondern ein Raumbereich in dem Gehäuse, den der Stellkolben von dem Schmiermittelvorrat abtrennt. Der abgetrennte Raumbereich dient zur Aufnahme des erzeugten Gases. Die Gaserzeugung erfolgt mit Hilfe eines besonderen gaserzeugenden Elementes, welches in dem Stellkolben angeordnet ist. Als gaserzeugendes Element kann ein Elektrolytbehälter und ein Korrosionselement vorgesehen sein. Man kann aber auch als gaserzeugendes Element einen Elektrolytbehälter und je eine in die Elektrolytflüssigkeit eintauchende Anode und Kathode vorsehen, die einem entsprechenden Stromkreis angehören. Auch bei dieser Ausführungsform ist das Anschlußteil ein Deckel, der mit dem Gehäusemantel über eine Falzverbindung verbunden ist. Dieser Deckel wird aufgesetzt, nachdem der Stellkolben mit dem eingesetzten gaserzeugenden Element in das Gehäuse eingeführt worden ist. Durch den Boden des Gehäuses führen Leiter nach außen. Das alles hat die Weiterentwicklung der eingangs beschriebenen Schmierstoffspender nicht beeinflußt und bisher in die Praxis keinen Eingang gefunden.

Der Erfindung liegt die Aufgabe zugrunde, einen Schmierstoffspender des eingangs beschriebenen Aufbaus in fertigungstechnischer und montagetechnischer Hinsicht zu vereinfachen und funktionell zu verbessern.

Diese Aufgabe wird dadurch gelöst, daß die Gasentwicklungszelle als ein selbständiges Bauteil ausgeführt und in eine Ausnehmung des Gehäuses als Boden einsetzbar und in dieser festsetzbar ist, daß die Abdeck-Kappe mit dem Bodenteil abschiebbar verbunden ist und zugleich als der Stellkolben ausgebildet ist, und daß die als Stellkolben ausgebildete Abdeck-Kappe von dem sich entwickelnden Gas von dem Bodenteil abschiebbar sowie dabei und danach von dem Gas als Stellkolben weiterbewegbar ist. - Es versteht sich, daß das Magazin zur Atmosphäre hin geschlossen ist.

Die Erfindung geht von der Erkenntnis aus, daß bei dem eingangs beschriebenen Schmierstoffspender, von dem die Erfindung ausgeht, die elastisch verformbare Haube verzichtbar ist, weil der Stellkolben die Haube ersetzen kann, wenn er in der beschriebenen Weise als Abdeck-Kappe eingesetzt wird. Erfindungsgemäß ist so anstelle einer elastisch verformbaren Haube die Abdeck-Kappe vorgesehen und diese ist als Stellkolben ausgebildet. Sie wird durch den sich aufbauenden Gasdruck von dem Bodenteil gleichsam abgesprengt und funktioniert danach als Stellkolben. Die Gasentwicklungszelle insgesamt wird zu einem selbständigen Bauteil, welches mit seinem Bodenteil auf der dem Anschlußteil gegenüberliegenden Seite in das Gehäuse eingesetzt wird. Zuvor wird das Magazin in die Magazinaufnahme eingeschraubt, und zwar so, daß nach Montage des Schmierstoffspenders die Gaserzeugung eingeschaltet werden kann. Die nach der Lehre der Erfindung ausgebildete Gaserzeugungsstelle kann vorgefertigt werden und in das vorgefertigte Gehäuse auf einfache Weise eingesetzt werden. Das Anschlußteil kann einteilig mit dem Gehäuse ausgeführt sein.

Im einzelnen bestehen mehrere Möglichkeiten zur weiteren Ausbildung des erfindungsgemäßen Schmierstoffspenders. So kann die Gasentwicklungszelle in der Ausnehmung des Gehäuses formschlüssig befestigt sein. Sie kann z. B. eingeschraubt oder eingerastet sein. Dabei besteht die Möglichkeit, die Anordnung so zu treffen, daß das Bodenteil der Gasentwicklungszelle auch als Überdruckventil funktioniert. Auch kann die Verbindung zwischen der Gasentwicklungszelle mit dem Gehäuse so ausgeführt sein, daß bei Entfernung der Gasentwicklungszelle erst eine Entspannung des Gases erfolgt, welches sich unter Druck in der Gasentwicklungszelle befindet. Es besteht aber auch die Möglichkeit, die Gasentwicklungszelle mit der Ausnehmung des Gehäuses formschlüssig zu verbinden.

Damit die Abdeck-Kappe die beschriebene Funktion auf einfache Weise erfüllen kann, weist sie zweckmäßigerweise einen elastisch verformbaren Kappenrand auf und ist sie mit diesem über eine Rastverbindung an dem Bodenteil, und zwar durch den sich aufbauenden Gasdruck abschiebbar, befestigt. Das Magazin ist vorzugsweise ein zylindrisches Bauteil mit Außengewinde und Innenraum für die Aufnahme des Gasentwicklungselementes, welches in die Magazinaufnahme einschraubbar ist. Die schon beschriebene Trennwand ist vorzugsweise als Schleusenboden der Magazinaufnahme ausgebildet. Dabei kann die Anordnung unschwer so getroffen werden, daß die als Schleusenboden der Magazinaufnahme ausgebildete Trennwand durch Beaufschlagung mit Bauteilen des Magazins beim Einschrauben des Magazins in die Magazinaufnahme von der Magazinaufnahme absprengbar ist. Die Trennwand kann aber auch als Boden des Magazins ausgebildet sein. Die Einschalteinrichtung kann ohne Schwierigkeiten so ausgebildet werden, daß beim Einschalten eine Zerstörung oder ein Absprengen der Trennwand erfolgt, die als Boden des Magazins ausgebildet ist.

Erfindungsgemäß können die beschriebenen Bauteile aus den verschiedensten Werkstoffen bestehen. Die beschriebene Gestaltung erlaubt es insbesondere, das Gehäuse mit dem Anschlußteil aus Kunststoff, z. B. auch aus durchsichtigem Kunststoff herzustellen. Das gilt aber auch für die Gasentwicklungszelle sowie das Magazin.

Gegenstand der Erfindung ist bei dem erfindungsgemäßen Schmierstoffspender auch eine besondere Ausbildung des Magazins und der Magazinaufnahme, die sich durch montagetechnische Einfachheit und hohe Funktionssicherheit auszeichnet. Insoweit lehrt die Erfindung, daß die Magazinaufnahme einen durch Sollbruchstellen angeschlossenen Schleusenboden aufweist, daß das Magazin zum Schleusenboden hin erstreckte Greiferarme besitzt, die vor dem Einsetzen des Magazins das Gasentwicklungselement festhalten, und daß die Greiferarme beim Einsetzen des Magazins in der Magazinaufnahme zur Freigabe des Gaserzeugungselementes abspreizbar sind. Dazu können die Greiferarme als zweiarmige Hebel ausgeführt sein, die über Gelenkelemente mit dem Magazinkörper verbunden sind. Die Greiferarme können an der dem Schleusenboden abgewandten Seite Gewindeausbildungen tragen, wobei die Greiferarme beim Einschrauben in das zugeordnete Gewinde der Magazinaufnahme um die Gelenkelemente aufspreizend schwenkbar sind. Gewindeausbildung und Gewinde sind bezüglich ihrer Dimensionierung entsprechend abgestimmt. In diesem Zusammenhang ist eine weitere bevorzugte Ausführungsform der Erfindung dadurch gekennzeichnet, daß die Greiferarme an ihrem dem Schleusenboden zugewandten Ende Rastvorsprünge zum Festhalten der Gasentwicklungselemente aufweisen. Auch können die Greiferarme zugleich als Stößel zum Absprengen des Schleusenbodens ausgebildet sein, so daß sie beim Einschrauben des Magazins in die Magazinaufnahme unter oder nach Freigabe des Gaserzeugungselementes den Schleusenboden absprengend beaufschlagen. Auch hier können einerseits die Magazinaufnahme mit dem Schleusenboden und andererseits das Magazin jeweils einteilig aus Kunststoff geformt sein.

Im folgenden wird die Erfindung anhand einer lediglich ein Ausführungsbeispiel darstellenden Zeichnung ausführlicher erläutert. Es zeigen
- Fig. 1: teilweise im Vertikalschnitt eine Ansicht eines erfindungsgemäßen Schmierstoffspenders, wobei die wesentlichen Bauteile auseinandergezogen sind,
- Fig. 2: den Gegenstand nach Fig. 1 mit zusammengesetzter Gasentwicklungszelle und eingesetztem Magazin,
- Fig. 3: den Gegenstand nach Fig. 2 mit in das Gehäuse eingesetzter Gasentwicklungszelle im nicht eingeschalteten Zustand,
- Fig. 4: den Gegenstand nach Fig. 3 im eingeschalteten Zustand, wobei die Bewegung des Stellkolbens von dem entwickelten Gas gesteuert ist und
- Fig. 5: mit den Teilfiguren a, b und c, in gegenüber den Fig. 1 bis 4 vergrößertem Maßstab sowie als Ausschnitt, eine andere Ausführungsform der Gasentwicklungszelle in bezug auf die Magazinaufnahme und das Magazin.

Der in den Figuren dargestellte Schmierstoffspender dient zur gesteuerten Abgabe eines Schmiermittels an eine Maschine. Zum grundsätzlichen Aufbau gehören ein Gehäuse 1 für die Aufnahme eines Schmierstoffvorrates, ein Maschinenanschlußteil 2 mit Schmierstoffabgabekanal 3 an einer Seite des Gehäuses sowie eine Gasentwicklungszelle 4 an der dem Anschlußteil 2 gegenüberliegenden Seite des Gehäuses 1. Zum grundsätzlichen Aufbau gehört fernerhin ein in das Gehäuse 1 eingepaßter Stellkolben. Die Bewegung des Stellkolbens ist von dem entwickelten Gas steuerbar.

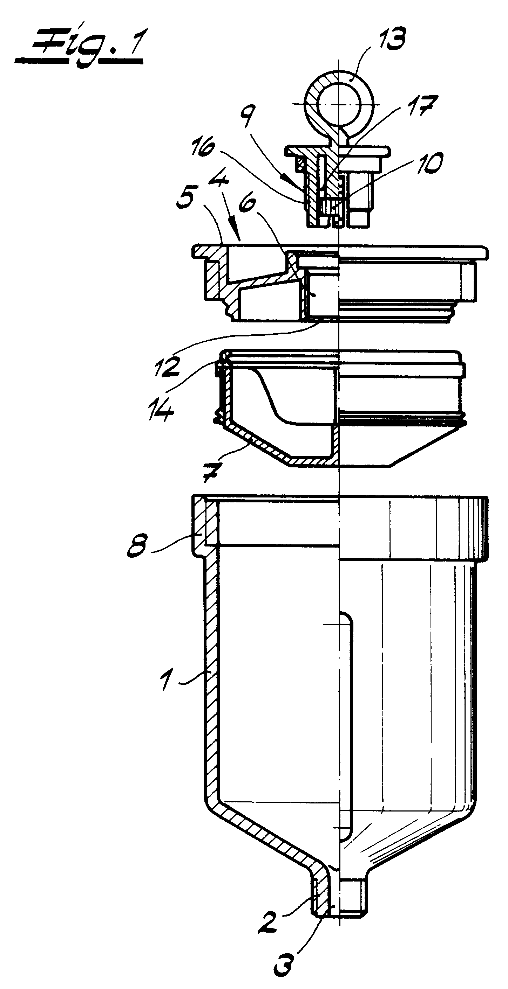

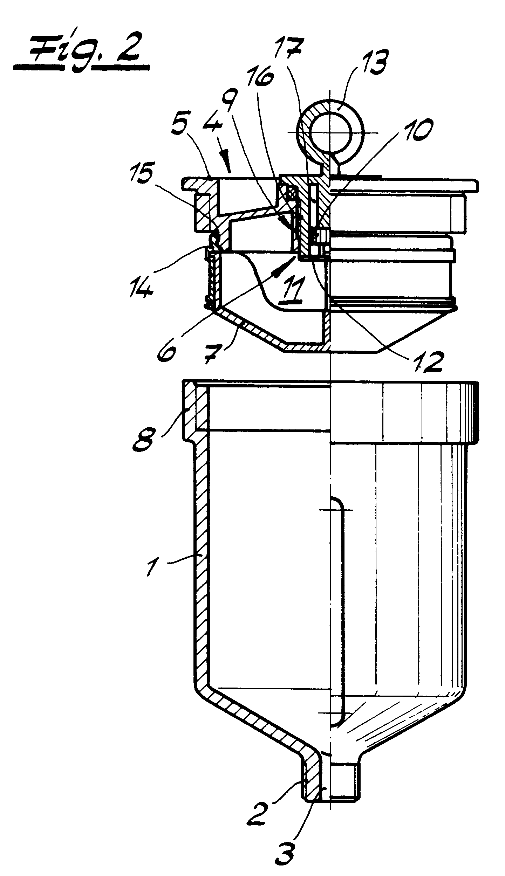

Aus einer vergleichenden Betrachtung der Fig. 1 und 2 entnimmt man zunächst, daß die Gasentwicklungszelle 4 als ein selbständiges Bauteil ausgeführt ist, welches aus einem Bodenteil 5, einer Magazinaufnahme 6 und einer Abdeck-Kappe 7 besteht. Die Gasentwicklungszelle 4 ist in eine Ausnehmung des Gehäuses 1 als Boden einsetzbar sowie in dieser festsetzbar. Im Ausführungsbeipiel besitzt das Gehäuse 1 einen besonderen Aufnahmebund 8 für das Einsetzen der Gasentwicklungszelle 4. Vergleicht man die Fig. 1 bis 4, so erkennt man, daß die Abdeck-Kappe 7 mit dem Bodenteil 5 abschiebbar verbunden ist und daß in die Magazinaufnahme 6 ein Magazin 9 mit einem darin untergebrachten galvanischen Gasentwicklungselement 10 einsetzbar und eingesetzt ist. Die Anordnung ist so getroffen, daß im jungfräulichen Zustand der Gasentwicklungszelle 4 in dem Raum zwischen Bodenteil 5 und Abdeck-Kappe 7 eine Gasentwicklungsflüssigkeit 11 angeordnet ist. Kontaktiert die Gasentwicklungsflüssigkeit 11 das Gasentwicklungselement 10, so tritt die gewünschte Gasbildung ein. Von der Gasentwicklungsflüssigkeit 11 ist das in die Magazinaufnahme 6 eingesetzte Magazin 9 mit dem Gasentwicklungselement 10 im jungfräulichen Zustand der Gasentwicklungszelle durch eine Trennwand 12 getrennt.

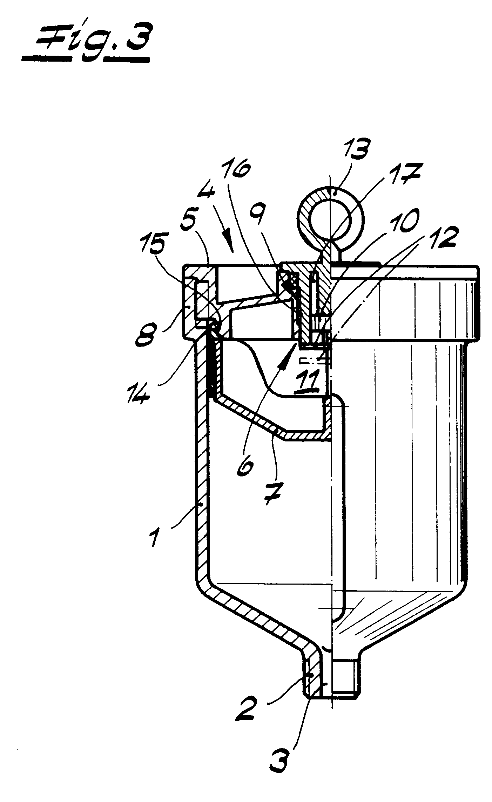

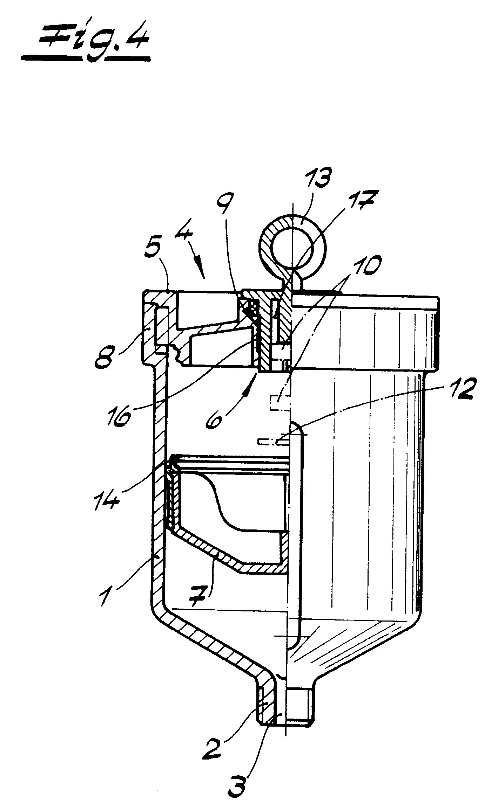

Insbesondere aus den Fig. 3 und 4 entnimmt man, daß die Abdeck-Kappe 7 zugleich als Stellkolben ausgebildet ist. In der Fig. 3 wurde angedeutet, daß die Trennwand 12 durch Betätigung einer mit dem Magazin 9 verbundenen mechanischen Einschaltvorrichtung 13 abdrückbar oder zerstörbar ist. Dadurch kommt die Gasentwicklungsflüssigkeit 11 mit dem Gasentwicklungselement 10 in Verbindung und die Gasentwicklung setzt ein. Sie schiebt zunächst die als Stellkolben ausgebildete Abdeck-Kappe 7 von dem Bodenteil 5 ab und ist danach von dem Gas als Stellkolben weiterbewegbar. Es versteht sich, daß das Magazin 9 zur Atmosphäre hin geschlossen ist.

Die Gasentwicklungszelle 4 ist im Ausführungsbeispiel in der Ausnehmung des Gehäuses 1 formschlüssig befestigt, nämlich eingeschraubt. Sie könnte auch stoffschlüssig befestigt sein. Die Abdeck-Kappe 7 besitzt einen elastisch verformbaren Kappenrand 14 und ist mit diesem über eine Rastverbindung 15 an dem Bodenteil 5 abschiebbar befestigt. Das Magazin 9 ist als ein zylindrisches Bauteil mit Außengewinde 16 und Innenraum 17 für die Aufnahme des Gasentwicklungselementes 10 ausgebildet. Es ist in die Magazinaufnahme 6 einschraubbar. Nicht dargestellt wurde, daß die Trennwand 12 als Boden des Magazins 9 ausgebildet sein kann. Es versteht sich, daß die Einschaltvorrichtung 13 dann so einzurichten ist, daß sie die Trennwand 12 absprengen oder zerstören kann.

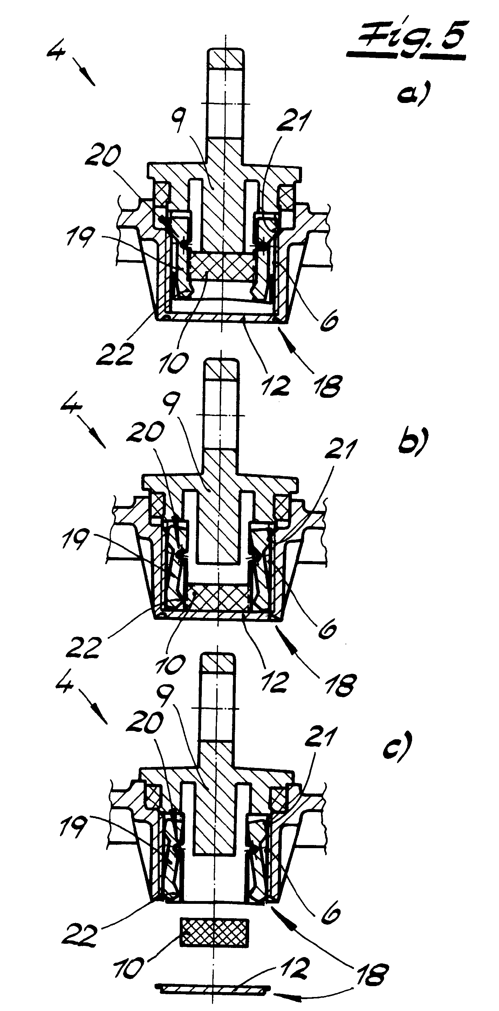

Die Figuren zeigen die Ausführungsform, bei der die Trennwand 12 als Schleusenboden der Magazinaufnahme 6 ausgebildet ist. Die als Schleusenboden der Magazinaufnahme 6 ausgebildete Trennwand 12 ist durch Beaufschlagung mit Bauteilen des Magazins 9 beim Einschrauben des Magazins 9 in die Magazinaufnahme 6 von der Magazinaufnahme 6 absprengbar. Insoweit wird insbesondere auch auf die Fig. 5 mit ihren Teilfiguren verwiesen. Man erkennt, daß die Magazinaufnahme 6 einen durch Sollbruchstellen 18 angeschlossenen Schleusenboden 12 aufweist, daß das Magazin zum Schleusenboden 12 hin erstreckte Greiferarme 19 besitzt, die vor dem Einsetzen des Magazins 9 das Gasentwicklungselement 10 festhalten und daß die Greiferarme 19 beim Einsetzen des Magazins 9 in die Magazinaufnahme 6 zur Freigabe des Gaserzeugungselementes 10 abspreizbar sind. Die Greiferarme 19 sind hier als zweiarmige Hebel ausgeführt, die über Gelenkelemente 20 mit dem Magazin 9 verbunden sind. Die Greiferarme 19 besitzen an der dem Schleusenboden 12 abgewandten Seite Gewindeausbildungen 21, und zwar so, daß die Greiferarme 19 beim Einschrauben in das zugeordnete Gewinde der Magazinaufnahme 6 um die Gelenkelemente 20 aufspreizend schwenkbar sind. Die Greiferarme 19 tragen im Ausführungsbeispiel an ihren dem Schleusenboden 12 zugewandten Enden Rastvorsprünge 22 zum Festhalten des Gasentwicklungselementes 10.

Das Absprengen der Trennwand 12, die zugleich Schleusenboden ist, kann auf verschiedene Weise erreicht werden und wurde in den Fig. 1 bis 4 nicht besonders dargestellt. In der Fig. 5 erkennt man, daß die Greiferarme 19 zugleich als Stößel zum Absprengen des Schleusenbodens 12 ausgebildet sind und beim Einschrauben des Magazins 9 in die Magazinaufnahme 6 unter oder nach Freigabe des Gaserzeugungselementes 10 den Schleusenboden 12 absprengend beaufschlagen.

Das Gehäuse 1 mit dem Anschlußteil 2 kann ebenso aus Kunststoff bestehen wie die Gasentwicklungszelle 4 sowie das Magazin 9 und die Magazinaufnahme 6.

## Patentansprüche

1. Schmierstoffspender zur gasgesteuerten Abgabe eines Schmierstoffes an eine Maschine, - mit
einem Gehäuse (1) für die Aufnahme eines Schmierstoffvorrates,
einem Maschinenanschlußteil (2) mit Schmierstoffabgabekanal (3) an einer Seite des Gehäuses (1) sowie
einer Gasentwicklungszelle (4) an der dem Anschlußteil (2) gegenüberliegenden Seite des Gehäuses (1) und mit
einem in das Gehäuse (2) eingepaßten Stellkolben,
wobei die Bewegung des Stellkolbens von dem entwickelten Gas gesteuert ist, die Gasentwicklungszelle (4) aus einem Bodenteil (5), einer Magazinaufnahme (6) und einer Abdeck-Kappe (7) besteht sowie in das Gehäuse (1) einsetzbar ist, wobei in die Magazinaufnahme (6) ein Magazin (9) mit einem darin untergebrachten galvanischen Gasentwicklungselement (10) einsetzbar ist,
wobei im jungfräulichen Zustand der Gasentwicklungszelle (4) in dem Raum zwischen Bodenteil (5) und Abdeck-Kappe (7) eine Gasentwicklungsflüssigkeit (11) angeordnet ist, mit der das Gasentwicklungselement (10) bei Kontakt gasbildend reagiert und von der das in die Magazinaufnahme (6) eingesetzte Magazin (9) mit dem Gasentwicklungselement (10) im jungfräulichen Zustand der Gasentwicklungszelle (4) durch eine Trennwand (12) getrennt ist,
die Trennwand (12) durch Betätigung einer mit dem Magazin (9) verbundenen mechanischen Einschalteinrichtung (13) abdrückbar oder zerstörbar ist, so daß das Gasentwicklungselement (10) mit der Gasentwicklungsflüssigkeit (11) in Kontakt kommt und die Gasentwicklung einsetzt, **dadurch gekennzeichnet**, daß die Gasentwicklungszelle (4) als ein selbständiges Bauteil ausgeführt und in eine Ausnehmung des Gehäuses (1) als Boden einsetzbar und in dieser festsetzbar ist, daß die Abdeck-Kappe (7) mit dem Bodenteil (5) abschiebbar verbunden ist und zugleich als der Stellkolben ausgebildet ist, und daß die als Stellkolben ausgebildete Abdeck-Kappe (7) von dem sich entwickelnden Gas von dem Bodenteil (5) abschiebbar sowie dabei und danach von dem Gas als Stellkolben weiterbewegbar ist.

2. Schmierstoffspender nach Anspruch 1, dadurch gekennzeichnet, daß die Gasentwicklungszelle (4) in der Ausnehmung des Gehäuses (1) formschlüssig befestigt ist.

3. Schmierstoffspender nach Anspruch 1, dadurch gekennzeichnet, daß die Gasentwicklungszelle (14) in der Ausnehmung des Gehäuses (1) formschlüssig befestigt ist.

4. Schmierstoffspender nach einem der Ansprüche 1 bis 3, dadurch gekennzeichnet, daß die Abdeck-Kappe (7) einen elastisch verformbaren Kappenrand (14) aufweist und mit diesem über eine Rastverbindung an dem Bodenteil (5) abschiebbar befestigt ist.

5. Schmierstoffspender nach einem der Ansprüche 1 bis 4, dadurch gekennzeichnet, daß das Magazin (9) als ein zylindrisches Bauteil mit Außengewinde (16) und Innenraum (17) für die Aufnahme des Gasentwicklungselementes (10) ausgebildet und in die Magazinaufnahme (6) einschraubbar ist.

6. Schmierstoffspender nach einem der Ansprüche 1 bis 5, dadurch gekennzeichnet, daß die Trennwand (12) als Schleusenboden der Magazinaufnahme (6) ausgebildet ist.

7. Schmierstoffspender nach einem der Ansprüche 1 bis 6, dadurch gekennzeichnet, daß die als Schleusenboden der Magazinaufnahme ausgebildete Trennwand (12) durch Beaufschlagung mit Bauteilen des Magazins (9) beim Einschrauben des Magazins (9) in die Magazinaufnahme (6) von der Magazinaufnahme (6) absprengbar ist.

8. Schmierstoffspender nach einem der Ansprüche 1 bis 5, dadurch gekennzeichnet, daß die Trennwand (12) als Boden des Magazins (9) ausgebildet ist.

9. Schmierstoffspender nach einem der Ansprüche 1 bis 8, dadurch gekennzeichnet, daß das Gehäuse (1) mit dem Anschlußteil aus Kunststoff, z. B. aus durchsichtigem Kunststoff, besteht.

10. Schmierstoffspender nach einem der Ansprüche 1 bis 9, dadurch gekennzeichnet, daß die Gasentwicklungszelle (4) sowie das Magazin (9) aus Kunststoff bestehen.

11. Schmierstoffspender nach einem der Ansprüche 1 bis 7 sowie 9 und 10, dadurch gekennzeichnet, daß die Magazinaufnahme (6) einen durch Sollbruchstellen (18) angeschlossenen Schleusenboden (12) aufweist, daß das Magazin (9) zum Schleusenboden (12) hin erstreckte Greiferarme (19) besitzt, die vor dem Einsetzen des Magazins (9) das Gasentwicklungselement (10) festhalten, und daß die Greiferarme (19) beim Einsetzen des Magazins (9) in die Magazinaufnahme (6) zur Freigabe des Gaserzeugungselementes (10) aufspreizbar sind.

12. Schmierstoffspender nach Anspruch 11, dadurch gekennzeichnet, daß die Greiferarme (19) als zweiarmige Hebel ausgeführt sind, die über Gelenkelemente (20) mit dem Magazin (9) verbunden sind, daß die Greiferarme (19) an der am Schleusenboden (12) abgewandten Seite Gewindeausbildungen (21) aufweisen, und daß die Greiferarme (19) beim Einschrauben in das zugeordnete Gewinde der Magazinaufnahme (6) um die Gelenke (20) aufspreizend schwenkbar sind.

13. Schmierstoffspender nach einem der Ansprüche 11 oder 12, dadurch gekennzeichnet, daß die Greiferarme (19) an ihrem dem Schleusenboden (12) zugewandten Ende Rastvorsprünge (22) zum Festhalten des Gasentwicklungselementes (10) aufweisen.

14. Schmierstoffspender nach einem der Ansprüche 11 bis 13, dadurch gekennzeichnet, daß die Greiferarme (19) zugleich als Stößel zum Absprengen des Schleusenbodens (12) ausgebildet sind und beim Einschrauben des Magazins (5) in die Magazinaufnahme (6) unter Freigabe oder nach Freigabe des Gaserzeugungselementes (10) den Schleusenboden (12) aufsprengend beaufschlagen.

15. Schmierstoffspender nach einem der Ansprüche 11 bis 14, dadurch gekennzeichnet, daß einerseits die Magazinaufnahme (6) mit dem Schleusenboden (12) und andererseits das Magazin (9) jeweils einteilig aus Kunststoff geformt sind.

## Claims

1. A lubricant dispenser for the gas-controlled delivery of a lubricant to a machine, having
a housing (1) for receiving a lubricant supply,
a machine connection part (2) with a lubricant delivery channel (3) on one side of the housing (1), and
a gas evolution cell (4) on the opposite side of the housing (1) to the connection part (2), and having
an operating piston fitted into the housing (2),
wherein the movement of the operating piston is controlled by the gas evolved, the gas evolution cell (4) consists of a base part (5), a magazine receiver (6) and a cover cap (7) and can be inserted in the housing (1), wherein a magazine (9) having an electrolytic gas evolution element (10) accommodated therein can be inserted in the magazine receiver (6),
wherein when the gas evolution cell (4) is in its pristine state a gas evolution liquid (11) is disposed in the space between the base part (5) and the cover cap (7), with which gas evolution liquid the gas evolution element (10) reacts on contact forming a gas and from which the magazine (9) with the gas evolution element (10), which is inserted in the magazine receiver (6), is separated by a partition wall (12) when the gas evolution cell (4) is in its pristine state,
the partition wall (12) can be forcibly separated or destroyed by operating a mechanical initiating element (13) attached to the magazine (9), so that the gas evolution element (10) comes into contact with the gas evolution liquid (11) and gas evolution commences, characterised in that the gas evolution cell (4) is produced as an independent component and can be inserted as a base in a recess of the housing (1) and can be fixed in the latter, that the cover cap (7) is attached to the base part (5) so that it can be pushed off and at the same time is constructed as the operating piston, and that the cover cap (7) constructed as the operating piston can be pushed off from the base part (5) by the gas being generated and thereby and thereafter can be moved further as the operating piston by the gas.

2. A lubricant dispenser according to claim 1, characterised in that the gas evolution cell (4) is fixed with a positive fit in the recess of the housing (1).

3. A lubricant dispenser according to claim 1, characterised in that the gas evolution cell (14) is fixed with a positive fit in the recess of the housing (1).

4. A lubricant dispenser according to any one of claims 1 to 3, characterised in that the cover cap (7) has an elastically deformable cap edge (14) and is fixed by the latter to the base part (5) via a locking connection so that it can be pushed off.

5. A lubricant dispenser according to any one of claims 1 to 4, characterised in that the magazine (9) is constructed as a cylindrical component having an external thread (16) and an interior space (17) for receiving the gas evolution element (10) and can be screwed into the magazine receiver (6).

6. A lubricant dispenser according to any one of claims 1 to 5, characterised in that the partition wall (12) is constructed as a transfer lock base of the magazine receiver (6).

7. A lubricant dispenser according to any one of claims 1 to 6, characterised in that the partition wall (12) constructed as a transfer lock base of the magazine receiver can be snapped off from the magazine receiver (6) by the impingement of components of the magazine (9) when the magazine (9) is screwed into the magazine receiver (6).

8. A lubricant dispenser according to any one of claims 1 to 5, characterised in that the partition wall (12) is constructed as the base of the magazine (9).

9. A lubricant dispenser according to any one of claims 1 to 8, characterised in that the housing (1) with the connection part consists of plastic, e.g. of transparent plastic.

10. A lubricant dispenser according to any one of claims 1 to 9, characterised in that the gas evolution cell (4) and the magazine (9) consist of plastic.

11. A lubricant dispenser according to any one of claims 1 to 7 and claims 9 and 10, characterised in that the magazine receiver (6) has a transfer lock base (12) attached by break-off points (18), that the magazine (9) has gripper arms (19) which are extended to the transfer lock base (12) and which secure the gas evolution element (10) before the insertion of the magazine (9), and that when the magazine (9) is inserted in the magazine receiver (6) the gripper arms (19) can spread apart in order to release the gas evolution element (10).

12. A lubricant dispenser according to claim 11, characterised in that the gripper arms (19) are designed as two-armed levers which are connected to the magazine (9) via joint elements (20), that the gripper arms (19) have threaded formations (21) on their arms remote from the transfer lock base (12), and that the gripper arms (19) can swivel about the joints (20) so as to spread apart from each other when screwed into the associated thread of the magazine receiver (6).

13. A lubricant dispenser according to either one of claims 11 or 12, characterised in that the gripper arms (19) have locking projections (22) on their ends facing the transfer lock base (12) for securing the gas evolution element (10).

14. A lubricant dispenser according to any one of claims 11 to 13, characterised in that the gripper arms (19) are constructed at the same time as plungers for snapping off the transfer lock base (12) and impinge on the transfer lock base (12) with a snapping off action when the magazine (6) is screwed into the magazine receiver (6) with the release or after the release of the gas evolution element (10).

15. A lubricant dispenser according to any one of claims 11 to 14, characterised in that firstly the magazine receiver (6) with the transfer lock base (12) and secondly the magazine (9) are each moulded in one piece from plastic.

## Revendications

1. Distributeur de graisse pour la délivrance, commandée par un gaz, de graisse à une machine, - comportant
un boîtier (1) servant à loger une réserve de graisse,
une partie de raccordement (2) de la machine, comportant un canal (3) de délivrance de graisse, d'un côté du boîtier (1), et
une cellule (4) de production de gaz, située sur le côté du boîtier (1), tourné à l'opposé de la partie de raccordement (2), et
un piston de réglage inséré dans le boîtier (2),
et dans lequel le déplacement du piston de réglage est commandé par le gaz produit, la cellule (4) de production de gaz est constituée par un élément de fond (5), un logement (6) pour un magasin et un capot de fermeture (7) et peut être insérée dans le boîtier (1), et dans lequel un magasin (9) dans lequel est logé un élément galvanique de production de gaz (10), peut être inséré dans le logement (6) pour le magasin, et
dans lequel, alors que la cellule (4) de production de gaz est dans son état vierge, dans l'espace présent entre l'élément de fond (5) et le capot de fermeture (7) est disposé un liquide de production de gaz (11), au moyen duquel l'élément (10) de production de gaz réagit avec un dégagement de gaz, lors de la venue en contact avec le liquide et dont est séparé, par une paroi de séparation (12), le magasin (9), qui est inséré dans le logement (6) et contient l'élément (10) de production de gaz, lorsque la cellule (4) de production de gaz est à l'état vierge, et la paroi de séparation (12) peut être enfoncée ou détruite par actionnement d'un dispositif d'insertion mécanique (13) reliée au magasin (9), de sorte que l'élément (10) de production de gaz vient en contact avec le liquide (11) de production de gaz et déclenche la production de gaz, caractérisé en ce que la cellule (4) de production de gaz est agencée sous la forme d'un composant autonome et peut être insérée en tant que fond dans un logement du boîtier (1) et peut être fixée dans ce dernier, que le capot de fermeture (7) est relié à l'élément de fond (5) de manière à pouvoir en être retiré, et est agencé simultanément sous la forme du piston de réglage, et que le capot de fermeture (7) réalisé en tant que piston de réglage peut être ressorti de l'élément de fond (5), par le gaz qui se dégage, et peut alors et ensuite continuer à être déplacé, par le gaz, en tant que piston de réglage.

2. Distributeur de graisse selon la revendication 1, caractérisé en ce que la cellule (4) de production de gaz est fixée selon une liaison par formes complémentaires dans le logement du boîtier (1).

3. Distributeur de graisse selon la revendication 1, caractérisé en ce que la cellule (14) de production de gaz est fixée selon une liaison par formes complémentaires dans le logement du boîtier (1).

4. Distributeur de graisse selon l'une des revendications 1 à 3, caractérisé en ce que le capot de fermeture (7) possède un bord (14), qui est déformable élastiquement, et peut être fixé de façon amovible au moyen de ce bord à l'élément de fond (5), par l'intermédiaire d'une liaison à encliquetage.

5. Distributeur de graisse selon l'une des revendications 1 à 4, caractérisé en ce que le magasin (9) est agencé sous la forme d'un composant cylindrique comportant un filetage extérieur (16) et une chambre intérieure (17) servant à loger l'élément (10) de production de gaz et peut être vissé dans le logement (6) prévu pour le magasin.

6. Distributeur de graisse selon l'une des revendications 1 à 5, caractérisé en ce que la paroi de séparation (12) est réalisée sous la forme d'un fond formant sas du logement (6) prévu pour le magasin.

7. Distributeur de graisse selon l'une des revendications 1 à 6, caractérisé en ce que la paroi de séparation (12), qui est agencée sous la forme d'un fond formant sas du logement pour le magasin, peut être éjectée en sautant à partir du logement (6) du magasin, sous l'effet de l'application d'une charge par des composants du magasin (9), lors du vissage du magasin (9) dans son logement (6).

8. Distributeur de graisse selon l'une des revendications 1 à 5, caractérisé en ce que la paroi de séparation (12) est agencée sous la forme d'un fond du magasin (9).

9. Distributeur de graisse selon l'une des revendications 1 à 8, caractérisé en ce que le boîtier (1) équipé de la partie de raccordement est réalisé en matière plastique, par exemple en matière plastique transparente.

10. Distributeur de graisse selon l'une des revendications 1 à 9, caractérisé en ce que la cellule (4) de production de gaz ainsi que le magasin (9) sont réalisés en matière plastique.

11. Distributeur de graisse selon l'une des revendications 1 à 7 ainsi que 9 et 10, caractérisé en ce que le logement (6) pour le magasin comporte un fond formant sas (12) raccordé par des points de rupture de consigne (18), que le magasin (9) possède des bras de saisie (19) qui s'étendent dans la direction du fond formant sas (12) et qui, avant l'insertion du magasin (9), maintiennent fermement l'élément (10) de production de gaz, et que, lors de l'insertion du magasin (9) dans son logement (6), les bras de saisie (19) peuvent être écartés de manière à libérer l'élément (10) de production de gaz.

12. Distributeur de graisse selon la revendication 11, caractérisé en ce que les bras de saisie (19) sont réalisés sous la forme de leviers à deux bras, qui sont reliés au magasin (9) par l'intermédiaire d'éléments d'articulation (20), que les bras de saisie (19) possèdent des parties filetées (21), sur le côté tourné à l'opposé du fond formant sas (12), et que lors du vissage dans le filetage associé du logement (6) prévu pour le magasin, les bras de saisie (19) peuvent basculer, en s'écartant, autour des articulations (20).

13. Distributeur de graisse selon l'une des revendications 11 ou 12, caractérisé en ce que les bras de saisie (19) comportent, sur leur extrémité tournée vers le fond formant sas (12), des appendices saillants d'encliquetage (22) servant à retenir fermement l'élément (10) de production de gaz.

14. Distributeur de graisse selon l'une des revendications 11 à 13, caractérisé en ce que les bras de saisie (19) sont agencés simultanément sous la forme de poussoirs servant à éjecter en le faisant sauter le fond formant sas (12) et, lors du vissage du magasin (5) dans son logement (6), chargent le fond formant sas (12) de manière à le faire sauter, tout en libérant l'élément (10) de production de gaz ou après la libération de cet élément.

15. Distributeur de graisse selon l'une des revendications 11 à 14, caractérisé en ce que d'une part le logement (6) pour le magasin équipé du fond formant sas (12) et d'autre part le magasin (9) sont réalisés respectivement d'un seul tenant en matière plastique.
